# DEMANDE DE BREVET EUROPEEN

(11) **EP 2 671 665 A1**
(43) Date de publication de la demande: **11.12.2013**
(21) Numéro de dépôt: 13002752.7
(22) Date de dépôt: 28.05.2013
(51) Int. Cl.: B23K 33/00, F41H 7/04

(54) **Elément structurel de protection pour un véhicule, véhicule comprenant un tel élément, et procédé de réalisation**

(30) Priorité: 06.06.2012 FR 1201633
(71) Demandeur: Renault Trucks Defense, 78000 Versailles-Satory (FR)
(72) Inventeur: Lemercier, Sébastien, 92160 Antony (FR)
(74) Mandataire: Putet, Gilles

(57) **Abrégé**

L'élément structurel de protection (5) comprend deux parois métalliques définissant entre elles un volume intérieur (7), ainsi que des organes de renfort (8) métalliques disposés dans le volume intérieur et fixés aux deux parois.

Les organes de renfort (8) sont soudés sur une première des parois (11), sur une face de celle-ci qui est tournée vers le volume intérieur (7).

De plus, la deuxième des parois (12) comprend des orifices (17) ménagés en regard des organes de renfort (8), lesdits organes de renfort étant soudés à la deuxième paroi (12), depuis l'extérieur, à travers les orifices (17).

## Description

La présente invention concerne un élément structurel de protection pour un véhicule, un véhicule comprenant un tel élément structurel de protection, ainsi qu'un procédé de réalisation d'un élément structurel de protection pour un véhicule.

L'invention trouve notamment son application pour des véhicules destinés à circuler dans des zones de conflit. En particulier, mais non exclusivement, l'élément structurel peut constituer tout ou partie du plancher du véhicule. Il doit posséder une structure renforcée capable de limiter sa déformation notamment lors de l'explosion d'une arme telle qu'une mine. En effet, une déformation trop importante de l'élément peut conduire non seulement à un grave endommagement de cet élément, mais également à des blessures sérieuses pour les occupants du véhicule et à la détérioration d'autres parties du véhicule.

Un tel élément structurel peut classiquement présenter une structure en « double peau », c'est-à-dire comportant deux parois fixées l'une à l'autre et définissant entre elles un volume intérieur, des organes de renfort étant disposés dans le volume intérieur et fixés aux deux parois.

Une telle structure présente d'importants avantages en termes de résistance mécanique. Toutefois, le procédé de réalisation d'une telle structure peut s'avérer complexe, car les organes de renfort, étant situés dans le volume intérieur de l'élément structurel, ne sont pas aisément accessibles. Ceci rend malaisée la fixation de ces organes de renfort aux deux parois.

La présente invention vise à remédier aux inconvénients mentionnés ci-dessus.

A cet effet, et selon un premier aspect, l'invention concerne un élément structurel de protection pour un véhicule, comprenant deux parois métalliques définissant entre elles un volume intérieur, ainsi que des organes de renfort métalliques disposés dans le volume intérieur et fixés aux deux parois. Les organes de renfort sont soudés sur une première des parois, sur une face de celle-ci qui est tournée vers le volume intérieur. De plus, la deuxième des parois comprend des orifices ménagés en regard des organes de renfort, lesdits organes de renfort étant soudés à la deuxième paroi, depuis l'extérieur, à travers les orifices, par exemple par une soudure bouchon.

Ainsi, la fixation des organes de renfort à la première paroi peut être réalisée dans un premier temps, en l'absence de la deuxième paroi. Il n'y a donc pas de contraintes d'accès, ce qui rend cette fixation aisée.

Puis, dans un deuxième temps, la deuxième paroi peut être mise en place. Les organes de renfort sont alors situés dans le volume intérieur, qui est un espace sensiblement fermé donc peu ou pas accessible.

Selon l'invention, grâce à la présence des orifices sur la deuxième paroi, en regard des organes de renfort, un opérateur peut avoir un accès à ces organes de renfort et effectuer une fixation depuis l'extérieur, ce qui peut être réalisé sans difficulté excessive. De plus, la soudure, et notamment la soudure bouchon, permet d'obtenir une qualité de fixation très satisfaisante.

Il s'ensuit que l'élément structurel selon l'invention, en plus de pouvoir être relativement facilement réalisé, présente une robustesse lui permettant de résister aux sollicitations extrêmes rencontrées en zone de conflit. Un tel élément structurel peut avantageusement constituer au moins une partie du plancher d'un véhicule.

Il est à noter que les termes « intérieur » et « extérieur » sont relatifs à l'élément structurel. En d'autres termes, le terme « intérieur » désigne des composants situés dans le volume intérieur ou tournés vers celui-ci, par opposition au terme « extérieur » qui désigne des composants situés du côté d'une des parois qui est opposé au volume intérieur, ou des composants tournés vers ledit côté.

Les première et deuxième parois sont fixées l'une à l'autre, soit directement, soit au moyen d'éléments intermédiaires qui peuvent comprendre les organes de renfort ou être distincts de ceux-ci.

On peut envisager que certains organes de renfort ne soient fixés qu'à l'une des deux parois.

Selon un deuxième aspect, l'invention concerne un véhicule comprenant un élément structurel de protection tel que précédemment décrit, cet élément pouvant former au moins une partie du plancher du véhicule.

Selon un troisième aspect, l'invention concerne un procédé de réalisation d'un élément structurel de protection pour un véhicule, le procédé comprenant les étapes consistant à :
- souder des organes de renfort sur une face d'une première paroi ;
- prévoir une deuxième paroi comprenant des orifices agencés de telle sorte qu'ils seront situés en regard des organes de renfort lorsque l'élément structurel sera réalisé ;
- positionner la deuxième paroi de sorte que les organes de renfort soient disposés dans le volume intérieur ainsi défini entre les deux parois, les orifices étant alors situés en regard des organes de renfort ;
- souder les organes de renfort à la deuxième paroi, depuis l'extérieur, à travers les orifices, par exemple par une soudure bouchon.

Comme indiqué précédemment, le procédé selon l'invention permet de réaliser aisément un élément structurel possédant des caractéristiques mécaniques telles qu'il peut résister à des contraintes importantes comme l'explosion d'une mine, contribuant ainsi à la protection des personnes.

En pratique, on peut en outre prévoir des organes de renfort munis d'ergots qui font saillie depuis leur face venant au contact de la deuxième paroi, en direction de la deuxième paroi. Dans ce mode de réalisation, lorsque la deuxième paroi est mise en place, chaque ergot est engagé dans un orifice de la deuxième paroi, et la soudure, par exemple la soudure bouchon, vient combler l'espace situé entre l'ergot et la périphérie de l'orifice correspondant.

Par ailleurs, avantageusement, les deux parois sont fixées l'une à l'autre par recouvrement, et non bord à bord, ce qui contribue à la robustesse de l'élément.

On décrit à présent, à titre d'exemples non limitatifs, plusieurs modes de réalisation possibles de l'invention, en référence aux figures annexées :
La figure 1 est une vue en perspective, depuis l'arrière, d'un véhicule équipé d'un élément structurel selon l'invention formant ici au moins en partie le plancher du véhicule ;
La figure 2 est une vue tronquée du véhicule, en perspective, montrant notamment l'élément structurel ;
La figure 3 est une vue partielle, en coupe transversale, du véhicule de la figure 1 ;
La figure 4 est une vue en perspective de l'élément structurel de la figure 1 ;
La figure 5 montre, en perspective et de dessous, un élément structurel selon un premier mode de réalisation, comportant une première paroi, des organes de renfort et des plaques intermédiaires, une deuxième paroi n'étant pas représentée ;
La figure 6 est une vue de détail de la figure 5 montrant les soudures entre les organes de renfort et la première paroi ;
La figure 7 montre l'élément structurel de la figure 5 avec sa deuxième paroi ;
La figure 8 est une vue de détail de la deuxième paroi de la figure 7, montrant un orifice dans lequel est engagé un ergot d'un organe de renfort ;
La figure 9 est une vue schématique et partielle, en coupe transversale, de l'élément structurel de la figure 7, montrant les soudures entre les organes de renfort et les deux parois ;
La figure 10 est une vue de détail en coupe transversale de l'élément structurel de la figure 7 montrant la soudure entre les deux parois et une plaque intermédiaire ;
La figure 11 montre, en perspective et de dessus, un élément structurel selon un deuxième mode de réalisation, comportant une première paroi, des organes de renfort et des plaques intermédiaires, une deuxième paroi n'étant pas représentée ;
La figure 12 est une vue de détail de la figure 11 montrant les soudures entre les organes de renfort et la première paroi ;
La figure 13 est une vue de détail en coupe transversale de l'élément structurel de la figure 11 montrant la soudure entre la première paroi et une plaque intermédiaire ;
La figure 14 montre l'élément structurel de la figure 11 avec sa deuxième paroi ;
La figure 15 est une vue en perspective et de dessus d'un élément structurel selon un troisième mode de réalisation, comportant une première et une deuxième parois, des organes de renfort et des plaques intermédiaires ;
La figure 16 est une vue de détail en coupe transversale de l'élément structurel de la figure 15 montrant notamment la soudure entre les parois et une plaque intermédiaire ;
La figure 17 est une vue similaire à la figure 15, la deuxième paroi n'étant pas représentée ;
La figure 18 est une vue de détail de la figure 17 montrant les soudures entre les organes de renfort et la première paroi ;
La figure 19 est une vue similaire à la figure 15, la deuxième paroi étant représentée de façon transparente ;
La figure 20 est une vue de détail de la deuxième paroi de la figure 19, montrant deux orifices pour le soudage des organes de renfort, visibles par transparence ;
La figure 21 est une vue schématique et partielle, en coupe transversale, de l'élément structurel de la figure 15, montrant les soudures entre les organes de renfort et les deux parois.

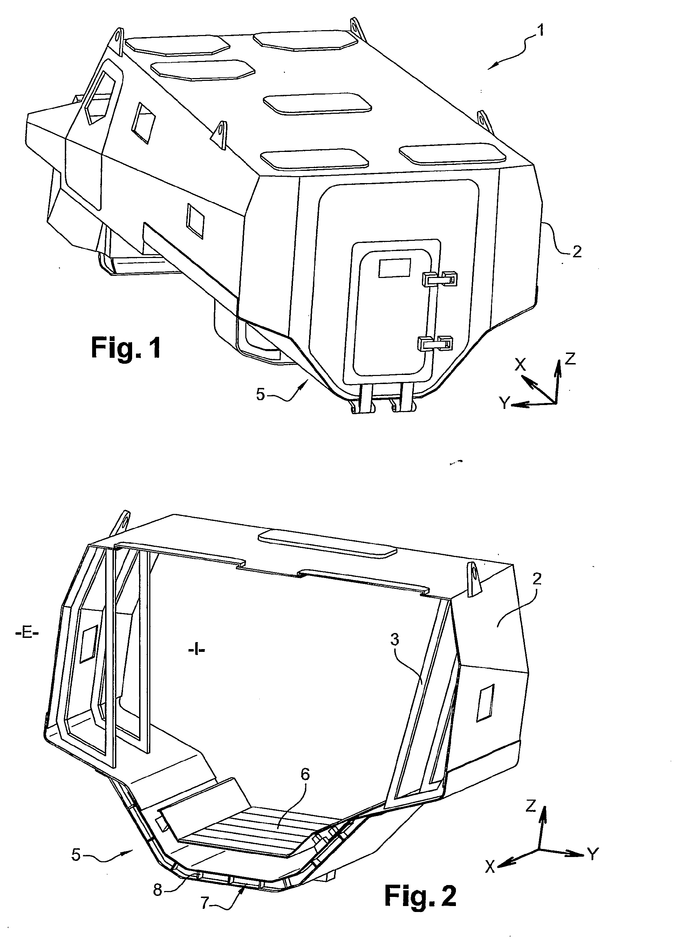

Sur la figure 1 est illustré un véhicule 1 qui peut typiquement être un véhicule blindé pouvant assurer le transport de troupes et/ou de matériel vers et dans une zone de conflit. Le véhicule 1 comprend une caisse 2 munie d'éléments de rigidification 3 telles que des poutres agencées à l'intérieur de la caisse 2 (figure 2).

De plus, le véhicule 1 comprend un élément structurel de protection 5, généralement fixé à la caisse 2. Dans les exemples représentés, l'élément structurel 5 forme au moins une partie du plancher du véhicule 1, par exemple en partie arrière du véhicule 1. Bien que la description soit effectuée en référence à cette réalisation, celle-ci ne doit pas être considérée comme limitative, l'élément structurel 5 pouvant constituer d'autres parties du véhicule 1. L'élément 5 peut de préférence faire partie intégrante de la caisse 2 du véhicule 1.

On peut en outre prévoir un faux plancher 6 fixé à l'élément structurel 5, à l'intérieur I du véhicule et à distance de l'élément structurel 5, faux plancher 6 sur lequel pourront marcher les occupants du véhicule 1.

Selon l'invention, de façon générale, l'élément structurel 5 comprend deux parois 11, 12 qui définissent entre elles un volume intérieur 7. Dans ce volume intérieur 7 sont disposés des organes de renfort 8 qui sont fixés aux deux parois 11, 12, par soudage. De façon concrète, de préférence, chaque organe de renfort 8 est fixé aux deux parois 11, 12, les organes de renfort 8 formant des entretoises entre les deux parois 11, 12. Les parois 11, 12 peuvent être fixées l'une à l'autre directement, via les organes de renfort 8, et/ou via un autre composant intermédiaire.

Par convention, la présente description est faite par rapport à un référentiel XYZ lié au véhicule 1 présentant une direction longitudinale X par rapport à laquelle sont notamment utilisés les termes « longueur », « arrière », une direction transversale Y par rapport à laquelle sont notamment utilisés les termes « largeur », « latéral », « transversal » et une direction verticale Z, par rapport à laquelle sont notamment utilisés les termes « supérieur », « inférieur », « hauteur ».

L'élément structurel 5 peut présenter un plan de symétrie longitudinal P orthogonal à la direction Y.

Le terme « intérieur » correspond à l'espace intérieur 7 situé entre les deux parois 11, 12 ou à des composants tournés vers cet espace intérieur 7, par opposition au terme « extérieur ». Par exception, l'expression « intérieur I du véhicule 1 » désigne l'espace situé à l'intérieur de la caisse 2 du véhicule, où seront installés les occupants du véhicule et l'éventuel matériel transporté. L'intérieur I du véhicule 1 est situé au-dessus de la paroi supérieure de l'élément structurel 5, donc à l'extérieur de l'élément structurel 5.

Ainsi, l'une des parois 11, 12 peut être tournée vers l'intérieur I du véhicule 1 tandis que l'autre paroi peut être tournée vers l'extérieur E du véhicule 1.

La configuration en « double peau » de l'élément structurel 5, associée à la présence des organes de renfort 8, lui confère une grande résistance mécanique. Les organes de renfort 8 peuvent être entrecroisés dans le volume intérieur 7 de façon à former un réseau, ce qui améliore encore la résistance mécanique. On peut par exemple former un réseau à mailles polygonales, typiquement rectangulaires ou carrées.

La résistance mécanique peut être renforcée par le choix des matériaux constitutifs de l'élément structurel 5. Ainsi, on peut prévoir de réaliser les parois 11, 12 en acier à blindage et les organes de renfort 8 en acier à blindage ou en acier à haute limite élastique.

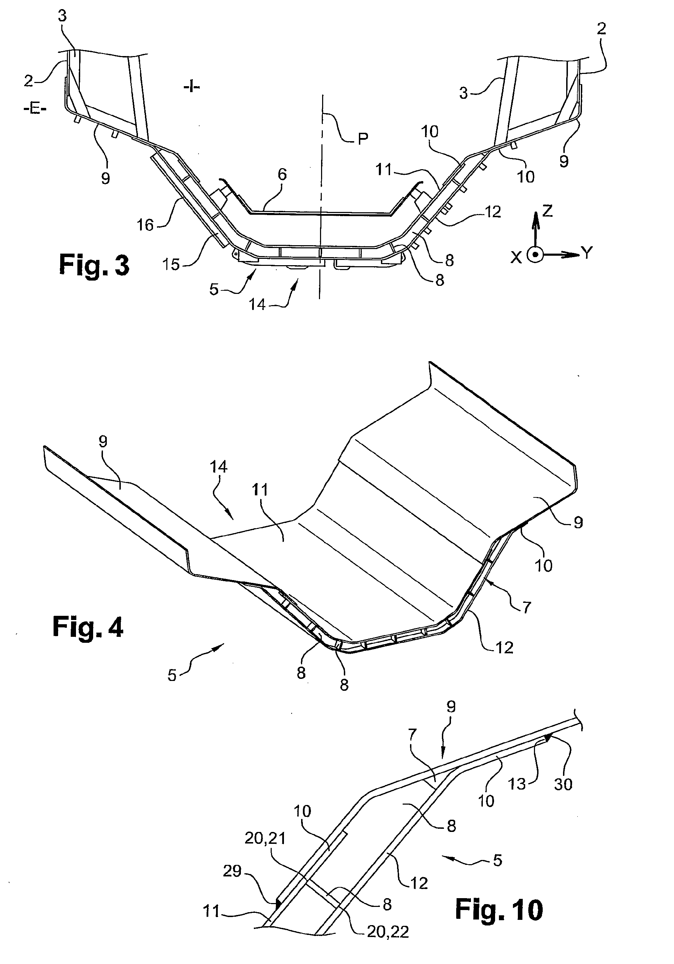

Comme illustré sur la figure 3 (uniquement du côté gauche de la figure), afin d'augmenter la rigidité de l'élément structurel 5, et d'assurer une première protection balistique et/ou anti mines, l'élément structurel 5 peut de plus comporter une plaque de matériau composite 15 collée sur la face extérieure de la paroi tournée vers l'extérieur E du véhicule 1. Cette plaque 15 peut par exemple être réalisée en fibre de verre résinée. Il peut également être prévu une feuille d'aluminium 16 fixée sur la face extérieure de la plaque 15, pour la protection de cette plaque 15 contre les agressions courantes.

Les deux parois 11, 12 peuvent être fixées l'une à l'autre par au moins deux zones périphériques 10 opposées. Par exemple, les parois 11, 12 peuvent être fixées l'une à l'autre au moyen de deux plaques intermédiaires 9. Chaque plaque intermédiaire 9 est soudée sur l'une des zones périphériques d'une paroi et sur la zone périphérique correspondante de l'autre paroi. Les plaques intermédiaires 9 peuvent elles-mêmes être fixées, par exemple par soudage, à la caisse 2 du véhicule 1.

De façon concrète, les parois 11, 12 peuvent être fixées l'une à l'autre par leurs zones périphériques latérales 10 respectives gauche et droite, au moyen d'une plaque intermédiaire 9 gauche et d'une plaque intermédiaire 9 droite. Une plaque intermédiaire 9 peut être située entre les deux parois 11, 12 ou, en variante, d'un même côté de l'élément structurel 5.

On réalise ainsi une soudure par recouvrement qui présente davantage de robustesse qu'une soudure bord à bord.

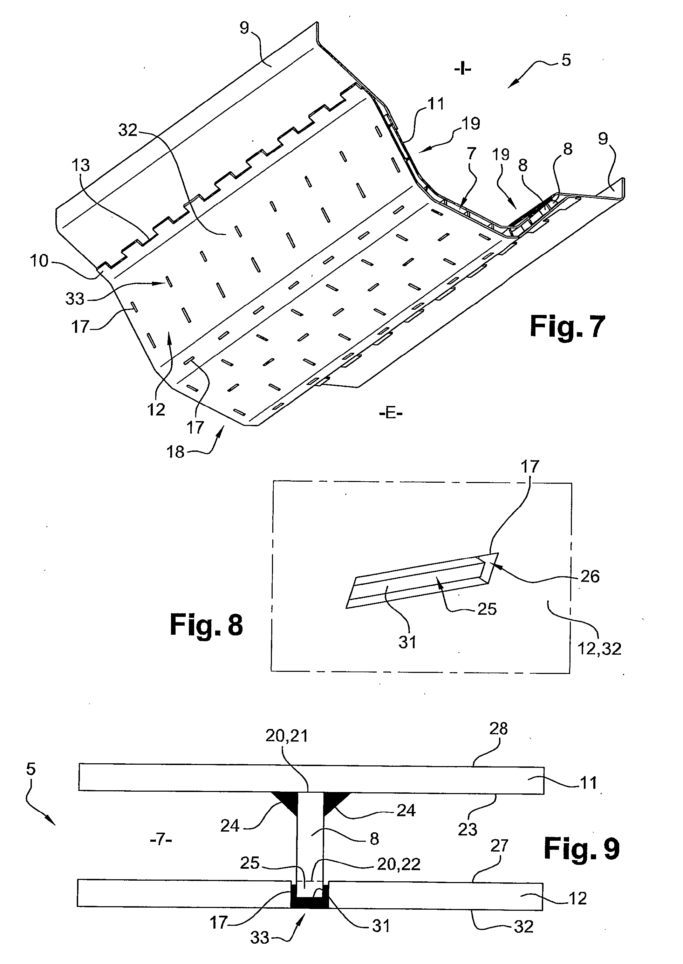

Pour augmenter encore la résistance mécanique de l'élément structurel 5, on peut prévoir que le bord 13 d'au moins une dite zone périphérique 10 d'au moins une paroi 11, 12 possède une forme en créneau comme on le voit en particulier sur la figure 7. La soudure en créneau est avantageuse par rapport à une soudure en ligne droite en termes de résistance mécanique. En effet, cela permet d'avoir une longueur de soudure plus importante, d'améliorer la tenue car la ligne de soudure en créneau travaille dans deux directions, et de plus cela évite qu'un éventuel début de déchirure n'entraîne la prolongation de cette déchirure sur la ligne de soudure. Avantageusement, chaque zone périphérique 10 de chaque paroi 11, 12 peut être fixée par une soudure en créneau à la plaque intermédiaire 9 correspondante.

Les parois 11, 12 peuvent être sensiblement parallèles au moins dans une portion centrale 14 de l'élément structurel 5. Par « parallèles », on entend que la distance entre les parois 11, 12 est sensiblement constante, ce qui ne signifie pas que ces parois soient nécessairement planes. Quant à l'expression « portion centrale », elle désigne la portion de l'élément structurel 5 qui est située à distance des zones périphériques 10 au niveau desquelles les parois 11, 12 peuvent être fixées l'une à l'autre. Dans ces zones périphériques 10, selon certaines réalisations envisageables, les parois 11, 12 peuvent converger l'une vers l'autre pour finalement se rejoindre.

En variante, les parois 11, 12 peuvent ne pas être parallèles. Par exemple, une paroi (par exemple la paroi supérieure) peut être sensiblement plane tandis que l'autre (la paroi inférieure) peut posséder une forme en cuvette.

Selon l'invention, les organes de renfort 8 sont soudés sur une première des parois 11, 12, sur une face de celle-ci qui est tournée vers le volume intérieur 7 de l'élément structurel 5. De plus, la deuxième des parois 11, 12 comprend des orifices 17 ménagés en regard des organes de renfort 8, lesdits organes de renfort 8 étant soudés à la deuxième paroi, depuis l'extérieur, à travers les orifices 17, par une soudure pouvant être une soudure bouchon.

Grâce à ces caractéristiques, l'assemblage de l'élément structurel 5 est aisément réalisable, car les organes de renfort 8 sont accessibles pour leur soudure à la deuxième paroi.

De façon concrète, le procédé de réalisation d'un tel élément structurel 5 prévoit, dans un premier temps, de souder les organes de renfort 8 sur une face d'une première paroi, qui deviendra une face intérieure de l'élément structurel 5. Puis, dans un deuxième temps, un opérateur positionne la deuxième paroi 12 de sorte que les organes de renfort 8 soient disposés dans le volume intérieur 7 ainsi défini entre les deux parois 11, 12, et que les orifices 17 soient situés en regard des organes de renfort 8. Les première et deuxième parois 11, 12 peuvent être fixées l'une à l'autre - le cas échéant au moyen d'au moins une plaque intermédiaire 9. L'opérateur soude les organes de renfort 8 à la deuxième paroi, depuis l'extérieur, à travers les orifices 17, par exemple par une soudure bouchon.

Dans la mesure où la soudure des organes de renfort 8 sur la première paroi ne pose pas de difficulté particulière, et où les orifices 17 ne sont utiles que pour la fixation des organes de renfort 8 à la deuxième paroi 12, la première paroi 11 est de préférence dépourvue d'orifices qui pourraient affaiblir l'élément structurel 5.

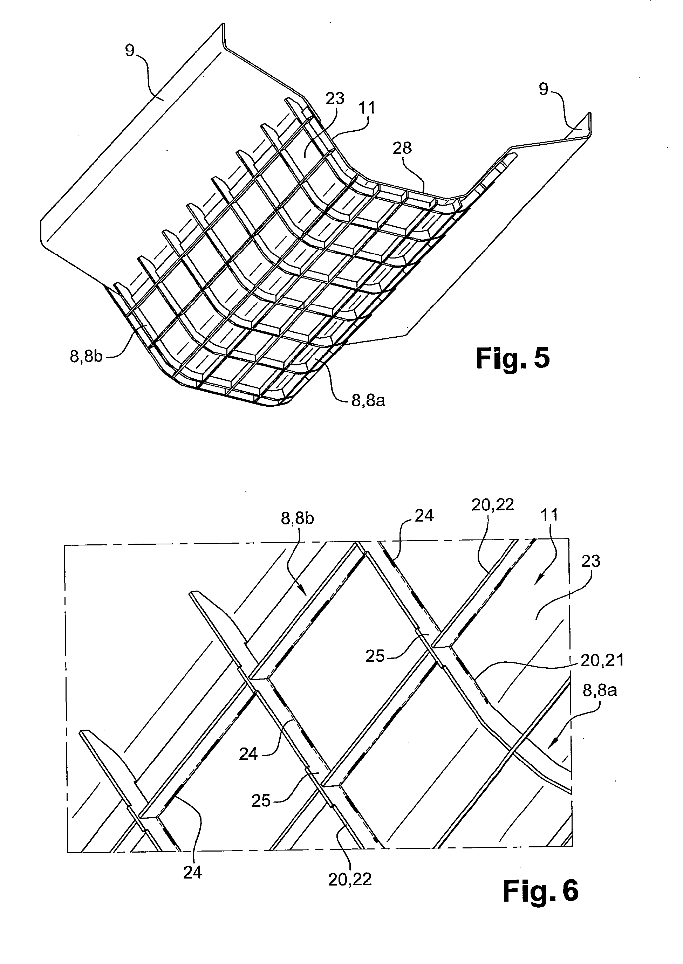

On se réfère à présent aux figures 5 à 10 qui illustrent un premier mode de réalisation de l'invention.

Dans ce premier mode de réalisation, comme on le voit sur la figure 7, la deuxième paroi 12 de l'élément structurel 5 - c'est-à-dire la paroi comportant les orifices 17 - est tournée vers l'extérieur E du véhicule 1, et forme la paroi inférieure de l'élément structurel 5. La première paroi 11 est tournée vers l'intérieur I du véhicule 1, formant ainsi la paroi supérieure de l'élément structurel 5, et est de préférence dépourvue d'orifices.

Les première et deuxième parois 11, 12 présentent ici chacune une forme gauche. Elles peuvent par exemple posséder une portion centrale 18 sensiblement plane et deux ailes latérales 19 sensiblement planes, agencées sensiblement symétriquement par rapport au plan P et s'éloignant l'une de l'autre depuis la portion centrale 18 en direction de leur bord libre 13. L'élément structurel 5 présente alors sensiblement la forme d'une cuvette évasée, qui résiste mieux aux impacts balistiques qu'une forme plane.

Dans cette réalisation, les parois 11, 12 sont sensiblement parallèles - c'est-à-dire situées à une distance constante l'une de l'autre - sur quasiment toute leur surface, à l'exception éventuelle des zones périphériques 10 de la deuxième paroi 12, comme on le voit sur la figure 10.

Les organes de renfort 8 peuvent comprendre des cloisons sensiblement planes, disposées sensiblement orthogonalement aux première et deuxième parois 11, 12 et étant en contact avec lesdites parois 11, 12 par leur tranche 20. Pour le cas où les parois 11, 12 ne seraient pas planes et/ou ne seraient pas parallèles, l'expression « orthogonalement » doit s'entendre de façon localisée par rapport à ces parois.

Toutefois, cette réalisation des organes de renfort 8 ne doit pas être considérée comme limitative. Notamment, les organes de renfort 8 pourraient comprendre des tubes, par exemple de section rectangulaire, en particulier carrée. On peut également envisager d'avoir à la fois des organes de renfort 8 en forme de cloisons et des organes de renfort 8 en forme de tubes. Par exemple, les cloisons pourraient être disposées selon une direction et les tubes selon la direction orthogonale. On pourrait également utiliser des cloisons ou des tubes selon les zones de l'élément 5, les cloisons pouvant être plus faciles à façonner que les tubes et étant donc de préférence utilisées dans les zones non planes de l'élément 5.

On peut prévoir d'une part des organes de renfort 8a longitudinaux, s'étendant de préférence sur toute la longueur de l'élément structurel 5, et d'autre part des organes de renfort 8b transversaux, s'étendant de préférence sur toute la largeur de l'élément structurel 5. Ces organes 8a, 8b sont entrecroisés dans le volume intérieur 7. A cet effet, ils peuvent comporter des demi encoches (non représentées) permettant leur imbrication mutuelle.

La tranche supérieure 21 des organes de renfort 8 est soudée sur la face intérieure 23 - c'est-à-dire inférieure - de la première paroi 11. De préférence, cette tranche supérieure 21 suit la forme de cette face intérieure 23 et comporte donc plusieurs tronçons successifs sensiblement plans. Comme illustré sur la figure 6, on peut prévoir de réaliser des soudures 24 chaînettes alternées, c'est-à-dire des soudures discontinues alternées de part et d'autre des organes de renfort 8 (les soudures masquées apparaissant en pointillés sur la figure 6).

On peut par ailleurs prévoir que les organes de renfort 8 comprennent des ergots 25 qui font saillie depuis leur face venant au contact de la deuxième paroi 12 - à savoir ici leur tranche inférieure 22 - en direction de la deuxième paroi 12.

Ces ergots 25 sont destinés à être engagés chacun dans un orifice 17 de la deuxième paroi 12, comme représenté sur la figure 8. La soudure viendra alors sensiblement combler l'espace 26 entre l'ergot 25 et la périphérie de l'orifice 17. On comprend donc que, de préférence, cet espace 26 doit être de dimensions suffisamment importantes pour permettre d'y introduire assez de matériau d'apport en vue du soudage, mais de dimensions suffisamment faibles pour ne pas dégrader la tenue mécanique de la deuxième paroi 12 du fait de trop grands orifices 17 et donc de trop grandes zones de soudure.

Parmi les rôles de ces ergots 25, on peut citer : le fait de faciliter le positionnement de la deuxième paroi 12 par rapport à la première paroi 11, et l'obtention d'une soudure de plus grande robustesse entre les organes de renfort 8 et la deuxième paroi 12, d'où l'augmentation de la résistance de l'élément structurel 5.

On peut prévoir que, en dehors des ergots 25, la tranche inférieure 22 des organes de renfort 8 soit au contact de la face intérieure 27 de la deuxième paroi 12, suive la forme de cette face 27, et comporte donc plusieurs tronçons successifs sensiblement plans. La hauteur des organes de renfort 8 - c'est-à-dire la distance entre les tranches 21 et 22 - est de préférence sensiblement égale à la hauteur du volume intérieur 7 - c'est-à-dire la distance entre la face intérieure 23 de la première paroi 11 et la face intérieure 27 de la deuxième paroi 12.

La disposition des ergots 25 peut varier, ceux-ci étant toutefois de préférence répartis sur une portion importante de la surface tournée vers l'intérieur de la deuxième paroi 12.

Selon une réalisation possible, au moins un ergot 25 - et généralement chacun des ergots 25 - présente une forme de nervure allongée, l'orifice 17 associé possédant une forme allongée correspondante - mais pas nécessairement identique.

Les ergots 25 peuvent par exemple être positionnés à la jonction entre deux organes de renfort 8, bien que cette réalisation ne soit pas limitative. On peut avoir des ergots 25 sensiblement longitudinaux et des ergots 25 sensiblement transversaux. En conséquence, la deuxième paroi 12 peut comporter des orifices 17 sensiblement longitudinaux et des orifices 17 sensiblement transversaux.

En pratique, une fois que les organes de renfort 8 ont été soudés sur la première paroi 11, la deuxième paroi 12 est mise en place par rapport à la première paroi 11, les ergots 25 étant engagés dans les orifices 17.

Les deux parois 11, 12 peuvent alors être assemblées l'une à l'autre, au moyen de plaques intermédiaires 9. Comme représenté sur les figures 7 et 10, cet assemblage se fait au niveau des zones périphériques 10 latérales des parois 11, 12, par recouvrement et non bord à bord. Chaque plaque intermédiaire 9 est ici située du côté supérieur de l'élément structurel 5, contre la face supérieure (extérieure) 28 de la première paroi 11 et contre la face supérieure (intérieure) 27 de la deuxième paroi 12, sur lesquelles elle est soudée par une soudure 29, respectivement 30, pouvant présenter une forme en créneau.

De préférence, lorsque les deux parois 11, 12 sont dans leur position assemblée, qu'elles soient ou non effectivement fixées l'une à l'autre" le bord libre 31 d'au moins un ergot 25 - et généralement de chacun des ergots 25 - est situé entre les faces intérieure 27 et extérieure 32 de la deuxième paroi 12, comme on le voit sur la figure 9. Ainsi, l'ergot 25 est suffisamment engagé dans l'orifice 17 pour permettre une liaison par soudage satisfaisante, sans toutefois dépasser à l'extérieur de l'élément structurel 5.

On peut alors procéder au soudage des organes de renfort 8 à la deuxième paroi 12. Ce soudage s'effectue depuis l'extérieur, à travers les orifices 17, par une soudure 33, par exemple une soudure bouchon. Celle-ci vient combler l'orifice 17, en englobant les ergots 25 lorsque ceux-ci sont présents.

La soudure 33 doit avoir une épaisseur suffisante pour garantir la solidité nécessaire. Du côté intérieur de l'élément structurel 5, elle peut s'étendre - ou non - jusqu'à la tranche inférieure 22 des organes de renfort 8. Du côté extérieur de l'élément structurel 5, elle peut affleurer la face extérieure 32 de la deuxième paroi 12 ou s'étendre au-delà, c'est-à-dire dépasser vers l'extérieur. Elle pourrait également se situer en retrait de la face extérieure 32, c'est-à-dire dans l'épaisseur de la deuxième paroi 12.

Grâce à la présence des orifices 17, éventuellement en combinaison avec les ergots 25, et par le biais des soudures 33 qui comblent l'espace 26 à l'intérieur de ces orifices 17, l'invention permet de faciliter considérablement la réalisation de l'élément structurel 5, sans dégrader sa tenue mécanique.

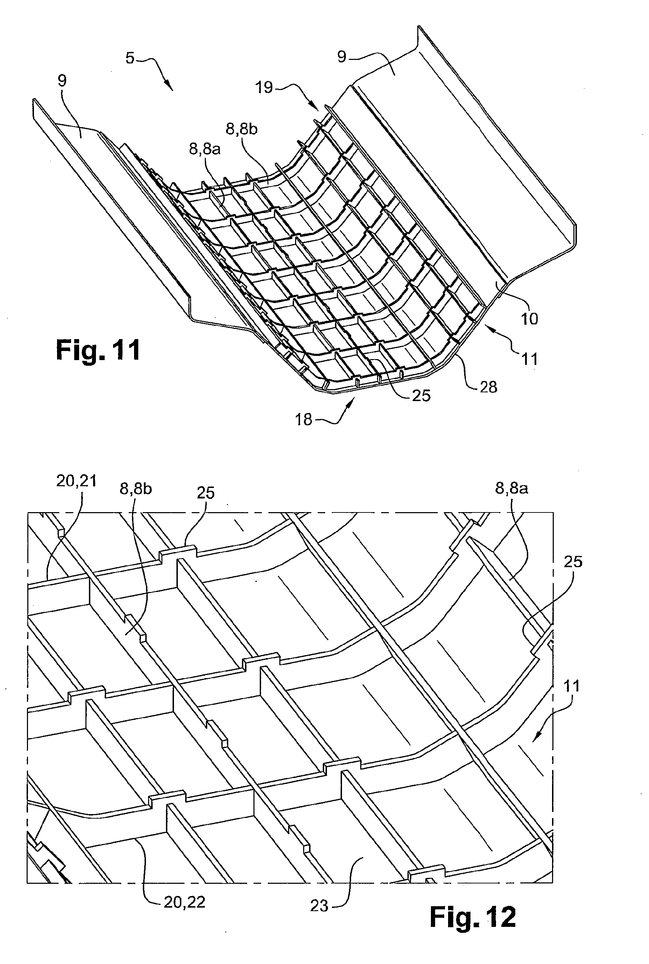

On se réfère à présent aux figures 11 à 14 qui illustrent un deuxième mode de réalisation de l'invention.

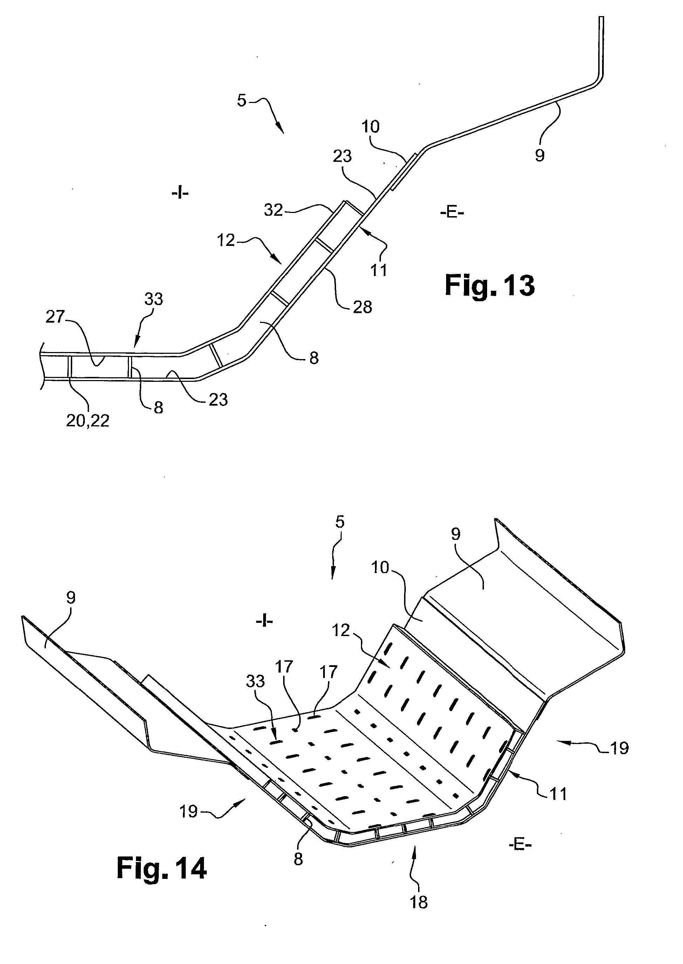

Comme on le voit sur la figure 14, ce deuxième mode de réalisation diffère du premier en ce que la deuxième paroi 12 de l'élément structurel 5 - c'est-à-dire la paroi comportant les orifices 17 - est tournée vers l'intérieur I du véhicule 1 et forme la paroi supérieure de l'élément structurel 5. La première paroi 11 est tournée vers l'extérieur E du véhicule 1, formant ainsi la paroi inférieure de l'élément structurel 5, et est de préférence dépourvue d'orifices.

La tranche inférieure 22 des organes de renfort 8 est soudée sur la face intérieure 23 - c'est-à-dire ici supérieure - de la première paroi 11, par exemple par des soudures 24 chaînettes alternées.

On peut par ailleurs prévoir que les organes de renfort 8 comprennent des ergots 25 qui font saillie depuis leur face venant au contact de la deuxième paroi 12 - à savoir ici leur tranche supérieure 21 - en direction de la deuxième paroi 12. Les ergots 25 sont destinés à être engagés chacun dans un orifice 17 de la deuxième paroi 12.

La deuxième paroi 12 peut être assemblée à la première paroi 11 au moyen de plaques intermédiaires 9. En variante, comme on le voit sur les figures 13 et 14, chaque plaque intermédiaire 9 peut être liée uniquement à la première paroi 11, l'assemblage des parois 11, 12 s'effectuant alors uniquement par l'intermédiaire de leur soudures respectives aux organes de renfort 8, notamment grâce aux soudures 33 à travers les orifices 17.

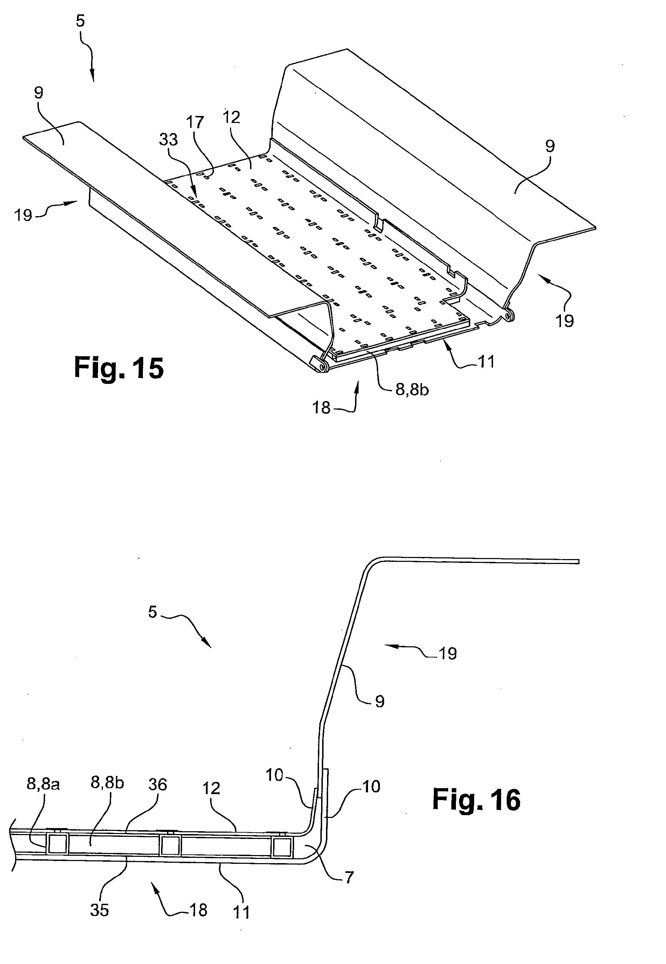

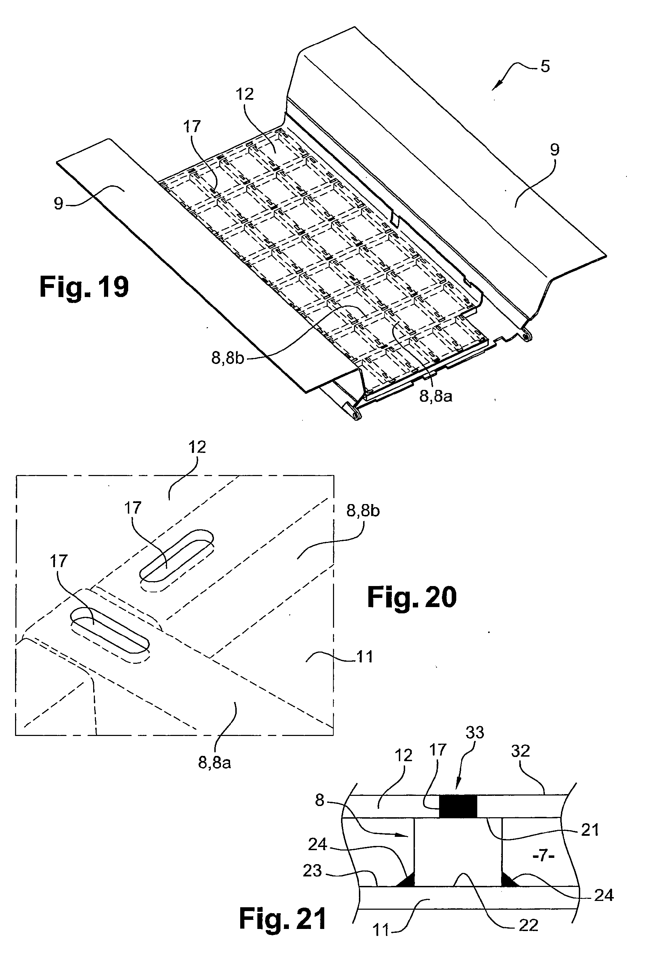

On se réfère à présent aux figures 15 à 21 qui illustrent un troisième mode de réalisation de l'invention.

Dans ce mode de réalisation, on peut prévoir que les première et deuxième parois 11, 12 soient sensiblement planes. Les parois 11, 12 peuvent être sensiblement parallèles - c'est-à-dire situées à une distance constante l'une de l'autre - sur quasiment toute leur surface.

De façon similaire aux premier et deuxième modes de réalisation, l'élément structurel 5 peut conserver une forme gauche, par exemple de cuvette évasée, dont la portion centrale 18 sensiblement plane serait formée par les parois 11, 12 assemblées et dont les ailes latérales 19 seraient formées par les plaques intermédiaires 9.

Comme illustré sur la figure 16, les parois 11, 12 peuvent posséder des zones périphériques 10 se rejoignant et formant, de chaque côté de l'élément structurel 5, des retours tournés vers l'intérieur I du véhicule 1, emprisonnant entre eux la plaque intermédiaire 9 correspondante. On a là encore une soudure par recouvrement et non une soudure bord à bord.

Le fait de prévoir des parois 11, 12 sensiblement planes et non gauches permet d'avoir recours à des organes de renfort 8 qui comprennent des tubes, ceux-ci pouvant posséder une section rectangulaire, et par exemple une section carrée. Ce type d'organes de renfort pourrait également être utilisé avec des parois 11, 12 gauches, mais la réalisation de l'élément structurel 5 serait alors plus complexe. On note toutefois que les organes de renfort 8 pourraient présenter une structure différente, et notamment la forme de cloisons sensiblement planes comme précédemment décrit. Selon une variante, on peut mettre en oeuvre un ensemble d'organes de renfort 8 comprenant à la fois des cloisons et des tubes, disposés par exemple selon des directions différentes ou en des zones différentes de l'élément 5.

Ces tubes formant les organes de renfort 8 sont en contact avec les première et deuxième parois 11, 12 par deux faces respectivement 35, 36 opposées sensiblement planes.

Dans la réalisation représentée, la deuxième paroi 12 de l'élément structurel 5 - c'est-à-dire la paroi comportant les orifices 17 - est tournée vers l'intérieur I du véhicule 1 et forme la paroi supérieure de l'élément structurel 5. La première paroi 11 est tournée vers l'extérieur E du véhicule 1, formant ainsi la paroi inférieure de l'élément structurel 5, et est de préférence dépourvue d'orifices. La face 35 de l'organe de renfort 8 est donc la face inférieure de celui-ci, tandis que la face 36 est la face supérieure. Bien entendu, une disposition inversée est possible.

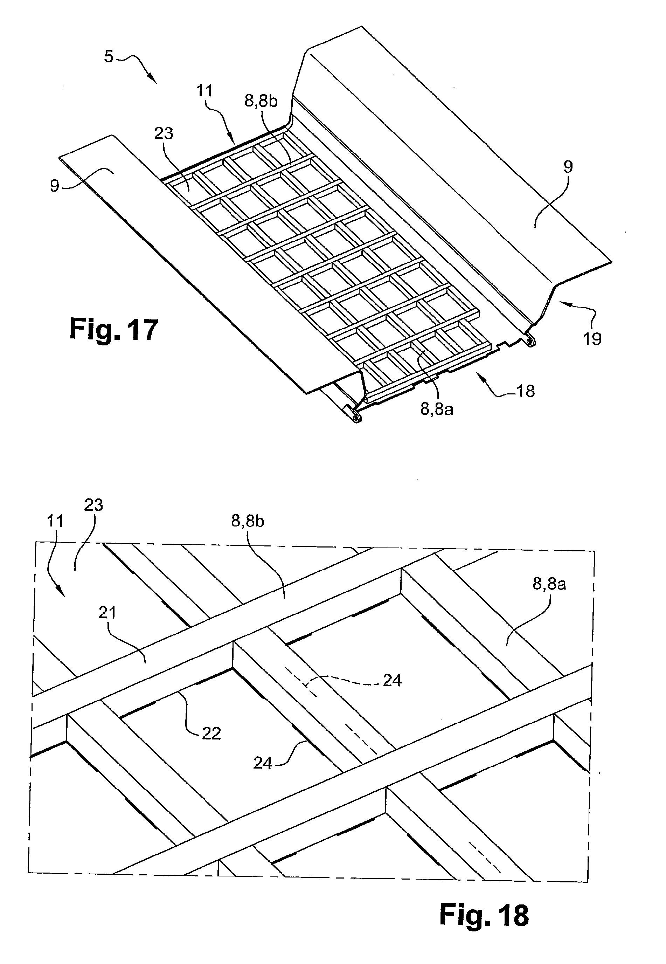

Avantageusement, l'élément structurel 5 comporte d'une part des organes de renfort 8a longitudinaux et d'autre part des organes de renfort 8b transversaux. Ces organes 8a, 8b sont entrecroisés dans le volume intérieur 7. A cet effet, comme illustré sur la figure 17, on peut prévoir que les organes de renfort 8b transversaux s'étendent sur toute la largeur des parois 11, 12 tandis que les organes de renfort 8a longitudinaux sont constitués de tronçons successifs intercalés entre deux organes de renfort 8b transversaux successifs. La disposition inversée est également possible.

La face inférieure 22 des organes de renfort 8 est soudée sur la face intérieure 23 - c'est-à-dire ici supérieure - de la première paroi 11, par exemple par des soudures 24 chaînettes alternées (les soudures masquées apparaissent en pointillés sur la figure 18).

Bien que la présence d'ergots 25 puisse être envisagée, ceux-ci ne s'avèrent pas nécessaires pour le soudage de la deuxième paroi 12 sur les organes de renfort 8. En effet, les organes de renfort 8 en forme de tubes n'étant pas minces comme la tranche 20 d'une cloison mais possédant une face venant au contact de la deuxième paroi 12 - à savoir ici une face supérieure 21 - de dimensions plus importantes, on peut réaliser à travers les orifices 17 un soudage robuste sans ergots.

Le soudage des organes de renfort 8 à la deuxième paroi 12 s'effectue depuis l'extérieur, à travers les orifices 17 longitudinaux et/ou transversaux, par une soudure 33, par exemple une soudure bouchon. Celle-ci vient combler l'orifice 17, et s'étend sur toute l'épaisseur de la deuxième paroi 12, de façon à venir en contact avec la face supérieure 21 des organes de renfort 8 pour permettre leur solidarisation à la deuxième paroi 12. Du côté extérieur de l'élément structurel 5, la soudure 33 peut affleurer la face extérieure 32 de la deuxième paroi 12 ou non.

Ainsi, l'invention apporte une amélioration déterminante à la technique antérieure, en fournissant un élément structurel pour un véhicule qui puisse résister à des contraintes importantes, telles que l'explosion d'une mine, et qui soit d'une réalisation relativement aisée pour un opérateur.

Les performances de l'élément structurel 5 selon l'invention, en termes de tenue mécanique et de déformée résiduelle, sont particulièrement intéressantes, la solution technique restant de plus relativement simple et économique. En effet, il n'est pas nécessaire d'avoir recours à des matières coûteuses, comme de l'aluminium ou des matières à base de fibres. En outre, on obtient un assez bon rapport masse / performance par rapport à l'art antérieur, et notamment par rapport à des dispositifs rapportés sous la caisse du véhicule (qui présentent par ailleurs de nombreux désavantages à l'usage).

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Elément structurel de protection pour un véhicule (1), comprenant deux parois métalliques (11, 12) définissant entre elles un volume intérieur (7), ainsi que des organes de renfort métalliques (8, 8a, 8b) disposés dans le volume intérieur (7) et fixés aux deux parois (11, 12), **caractérisé :**
- **en ce que** les organes de renfort (8) sont soudés sur une première des parois (11), sur une face (23) de celle-ci qui est tournée vers le volume intérieur (7) ;
- et **en ce que** la deuxième des parois (12) comprend des orifices (17) ménagés en regard des organes de renfort (8), lesdits organes de renfort (8) étant soudés à la deuxième paroi (12), depuis l'extérieur, à travers les orifices (17).

2. Elément selon la revendication 1, **caractérisé en ce que** les organes de renfort (8) sont entrecroisés dans le volume intérieur (7) de façon à former un réseau.

3. Elément selon la revendication 1 ou 2, **caractérisé en ce que** les organes de renfort (8) comprennent des cloisons sensiblement planes, disposées sensiblement orthogonalement aux première et deuxième parois (11, 12) et étant en contact avec lesdites parois (11, 12) par leur tranche (20, 21, 22).

4. Elément selon l'une des revendications 1 à 3, **caractérisé en ce que** les organes de renfort (8) comprennent des tubes qui sont en contact avec les première et deuxième parois (11, 12) par deux faces opposées (21, 22) sensiblement planes.

5. Elément selon l'une des revendications 1 à 4, **caractérisé en ce que** les organes de renfort (8) comprennent des ergots (25) qui font saillie depuis leur face (21, 22) venant au contact de la deuxième paroi (12), en direction de la deuxième paroi (12), chaque ergot (25) étant engagé dans un orifice (17) de la deuxième paroi (12).

6. Elément selon la revendication 5, **caractérisé en ce qu'**au moins un ergot (25) présente une forme de nervure allongée, et **en ce que** l'orifice (17) associé possède une forme allongée correspondante.

7. Elément selon la revendication 5 ou 6, **caractérisé en ce que** le bord libre (31) d'au moins un ergot (25) est situé entre les faces intérieure (27) et extérieure (32) de la deuxième paroi (12).

8. Elément selon l'une des revendications 1 à 7, **caractérisé en ce que** les deux parois (11, 12) sont fixées l'une à l'autre par au moins deux zones périphériques (10) opposées.

9. Elément selon la revendication 8, **caractérisé en ce que** les deux parois (11, 12) sont fixées l'une à l'autre au moyen de deux plaques intermédiaires (9), chaque plaque intermédiaire (9) étant soudée sur l'une des zones périphériques (10) de la première paroi (11) et sur la zone périphérique correspondante (10) de la deuxième paroi (12).

10. Elément selon la revendication 8 ou 9, **caractérisé en ce que** le bord (13) d'au moins une dite zone périphérique (10) d'au moins une paroi (11, 12) possède une forme en créneau.

11. Elément selon l'une des revendications 1 à 10, **caractérisé en ce que** les première et deuxième parois (11, 12) sont sensiblement parallèles au moins dans une portion centrale (14) de l'élément structurel (5).

12. Elément selon l'une des revendications 1 à 11, **caractérisé en ce que** les première et deuxième parois (11, 12) sont sensiblement planes.

13. Elément selon l'une des revendications 1 à 11, **caractérisé en ce que** les première et deuxième parois (11, 12) présentent chacune une forme gauche, par exemple possédant une portion centrale (18) sensiblement plane et deux ailes latérales (19) sensiblement planes, agencées sensiblement symétriquement et s'éloignant l'une de l'autre depuis la portion centrale (18) en direction de leur bord libre.

14. Véhicule, **caractérisé en ce qu'il** comprend un élément structurel (5) de protection selon l'une des revendications 1 à 13.

15. Véhicule selon la revendication 14, **caractérisé en ce que** l'élément (5) forme au moins une partie du plancher du véhicule (1).

16. Véhicule selon la revendication 14 ou 15, **caractérisé en ce que** la deuxième paroi (12) de l'élément (5) est tournée vers l'intérieur (I) du véhicule (1).

17. Véhicule selon la revendication 14 ou 15, **caractérisé en ce que** la deuxième paroi (12) de l'élément (5) est tournée vers l'extérieur (E) du véhicule (1).

18. Véhicule selon l'une des revendications 14 à 17, **caractérisé en ce que** l'élément (5) comporte de plus une plaque (15) de matériau composite collée sur la face extérieure de la paroi (11, 12) tournée vers l'extérieur (E) du véhicule (1).

19. Procédé de réalisation d'un élément structurel (5) de protection pour un véhicule (1), le procédé comprenant les étapes consistant à :
- souder des organes de renfort (8) sur une face (23) d'une première paroi (11) ;
- prévoir une deuxième paroi (12) comprenant des orifices (17) agencés de telle sorte qu'ils seront situés en regard des organes de renfort (8) lorsque l'élément structurel (5) sera réalisé ;
- positionner la deuxième paroi (12) de sorte que les organes de renfort (8) soient disposés dans le volume intérieur (7) ainsi défini entre les deux parois (11, 12), les orifices (17) étant alors situés en regard des organes de renfort (8) ;
- souder les organes de renfort (8) à la deuxième paroi (12), depuis l'extérieur, à travers les orifices (17).
